(19) Europäisches Patentamt / European Patent Office / Office européen des brevets

(11) **EP 1 924 077 A2**

(12) **EUROPEAN PATENT APPLICATION**

(43) Date of publication:
**21.05.2008 Bulletin 2008/21**

(51) Int Cl.:
***H04N 1/405*** (2006.01)

(21) Application number: **07119323.9**

(22) Date of filing: **25.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **30.10.2006 KR 20060105898**
         **26.07.2007 KR 20070075011**

(71) Applicant: **Samsung Electronics Co., Ltd.**
**Suwon-si,**
**Gyeonggi-do 442-742 (KR)**

(72) Inventors:
 • **Lee, Hae-kee**
   **Gyeonggi-do**
   **Suwon-si (KR)**

 • **Lee, Ho-keun**
   **Gyeonggi-do**
   **Suwon-si (KR)**
 • **Kim, Choon-woo**
   **Seoul (KR)**
 • **Lee, Jong-ok**
   **Incheon (KR)**
 • **Ryu, Byong-tae**
   **Seoul (KR)**

(74) Representative: **Waddington, Richard**
**Appleyard Lees**
**15 Clare Road**
**Halifax, Yorkshire HX1 2HY (GB)**

(54) **Image forming apparatus and image forming method thereof**

(57) An image forming apparatus, including a halftone image converter (210) to convert input image data having a plurality of bits per pixel into halftone image data having a binary pixel value corresponding to a bright pixel or a dark pixel, and a bit encoder (220) to divide the halftone image data into blocks with a predetermined size, and to perform a bit-encoding operation by using the number of either the bright or dark pixels in the block to output encoded image data.

FIG. 2A

EP 1 924 077 A2

**Description**

BACKGROUND OF THE INVENTION

Field of the Invention

The present invention relates to an image forming apparatus and an image forming method thereof, and more particularly, to an image forming apparatus which improves a printing speed by reducing a transmission size of halftone image data and enhances spatial resolution, and an image forming method thereof.

Description of the Related Art

A performance quality of an image forming apparatus such as a laser printer and a multifunction printer can be determined by printing quality and printing speed. Factors to determine the printing speed, which is measured in units known as page per minute (PPM), include printing resolution, printing data processing time in computers, data transmission time from computers to printers, printing data processing time in printers and printing time in a printer engine.

Conventionally, PPM was determined mainly by a duration of the printing time in the printer engine. Recently, however, PPM is mainly determined by factors of printing data processing time in computers, data transmission time from computers to printers and printing data processing time in printers as printing speed in the printer engine and printing resolution have improved.

A data exchange method between computers and printers determines the printing data processing time in computers, the data transmission time from computers to printers and the printing data processing time in printers. If a driver employs a graphics device interface (GDI) method which performs a color matching and an image rendering, halftone printing data which is compressed by a compression algorithm such as Joint Bi-level Image Experts Group (JBIG) is transmitted from a computer to a printer to speed up the data transmission. The compressed halftone printing data which is transmitted to the printer is decompressed to be printed by a printing part. If a driver employs a page description language (PCL), the printer processes the printing data, unlike in the GDI method.

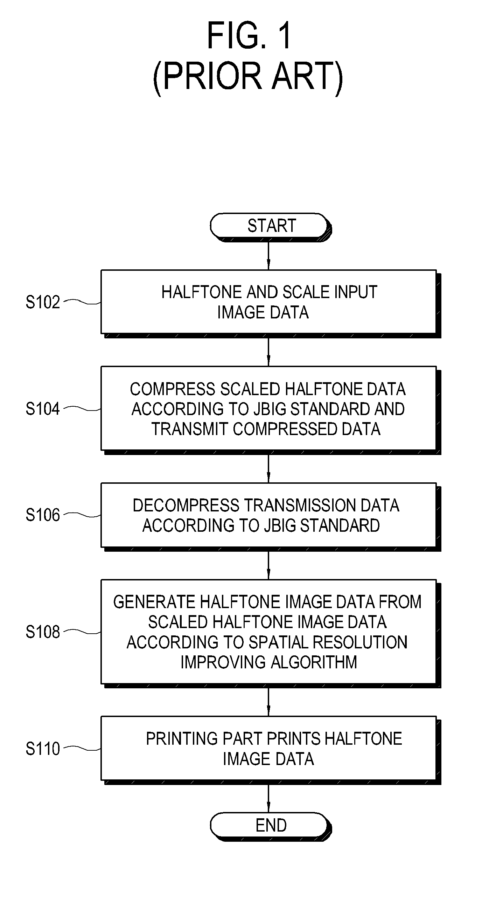

FIG. 1 is a control flowchart of a conventional image forming method to reduce a size of transmission data. As illustrated therein, to reduce the size of data transmitted from a computer to a printer, input image data is converted into halftone image data to be scaled in operation S102. The scaled halftone image data is compressed with JBIG standards to be transmitted to the printer in operation S104. The compressed transmission data is decompressed to be output as scaled halftone image data in operation S106. The halftone image data having improved resolution by a spatial resolution improving algorithm is generated in operation S108 to be printed by a printing part in operation S110.

The method which is illustrated in FIG. 1 reduces the size of the transmission data. However, if the halftone image data is obtained by a clustered-dot screen in which dots corresponding to binary image data are formed as closely as possible to each other, a pattern formed by the clustered-dots is distorted, thereby causing noise.

SUMMARY OF THE INVENTION

The invention provides an image forming apparatus to reduce a transmission size of halftone image data to improve a printing speed, and an image forming method thereof.

The invention also provides an image forming apparatus to improve spatial resolution, and an image forming method thereof.

The invention also provides an image forming apparatus which can maintain a boundary line clearly when using a clustered-dot screen, and an image forming method thereof.

Additional aspects and utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

According to an aspect of the invention there is provided an image forming apparatus, comprising a halftone image converter to convert input image data having a plurality of bits per pixel into halftone image data having a binary pixel value corresponding to a bright pixel or a dark pixel, and a bit encoder to divide the halftone image data into blocks of a predetermined size, and to perform a bit-encoding operation by using a number of either the bright or dark pixels in the block to output encoded image data.

The bit encoder may use 4X4 pixels as the predetermined size of the block.

The bit encoder may convert the number of either the bright or dark pixels in the block into 4-bit encoded binary image data value corresponding to the number of either the bright or dark pixels in the block if the number of either the bright or dark pixels in the block is 15 or less, and converts the number of either the bright or dark pixels in the block into a 4-bit encoded image data value of 1111 if the number of either the bright or dark pixels in the block is 16.

The apparatus may further comprise a joint bi-level image experts group (JBIG) compressor to compress the encoded image data according to JBIG standard and to output corresponding JBIG image data.

According to another aspect of the invention there is provided an image forming apparatus, comprising an interface to receive encoded image data that is generated by dividing halftone image data into blocks of a predetermined size and bit-encoding by using the number of either bright or dark pixels in each of the blocks of a predetermined size, and a bit decoder to produce a decoded block by decoding the received encoded image data into another halftone image data having a binary pixel.

The bit decoder may comprise a number calculator to calculate the number of either the bright or dark pixels in the decoded block by using the encoded image data of the decoded block and the encoded image data of neighboring blocks.

The apparatus may further comprise a region determiner to determine a screen region and an edge region from the decoded block by using the number of either the bright or dark pixels in the decoded block and numbers of either bright or dark pixels in the neighboring blocks.

The region determiner may use a larger of two values corresponding to a difference between a number of either bright or dark pixels in upper and lower blocks adjacent to the decoded block, and a difference between number of either bright or dark pixels in left and right blocks adjacent to the decoded block, to determine the screen region and the edge region.

The bit decoder may further comprise a screen region processor to calculate a screen order by using a halftone table used to convert the encoded image data into the another halftone image data having the binary pixel.

The screen region processor may decode the encoded image data to the another halftone image data by expressing a dark pixel corresponding to the position of the decoded block and having a smaller value than the number of the dark pixels in the decoded block and by expressing a bright pixel corresponding to another position of the decoded block and having a larger or same value as the number of the dark pixels in the decoded block by using the screen order if the encoded image data is bit-encoded with the number of the dark pixels in the block of the predetermined size.

The bit decoder may further comprise an edge region processor to calculate an edge order with a number of either bright or dark pixels in the neighboring blocks and a weight function to express an edge region.

The edge region processor may use, as a weight function, a weight value that is optimized through a genetic algorithm.

According to another aspect of the invention there is provided an image forming method, comprising converting input image data having a plurality of bits per pixel into halftone image data having a binary pixel value corresponding to a bright pixel or a dark pixel, and dividing the halftone image data into blocks of a predetermined size and outputting encoded image data by bit-encoding the encoded image data through a number of either the bright or dark pixels in the block.

The outputting of the encoded image data may comprise using 4X4 pixels as the size of the predetermined block.

The outputting of the encoded image data may comprise converting the number of either the bright or dark pixels in the blocks into 4-bit encoded binary image data corresponding to the number of either the bright or dark pixels if the number of either the bright or dark pixels in the block is 15 or less, and converting the number of the dark pixels in the block into 4-bit encoded image data value of 1111 if the number of the dark pixels in the block is 16.

The method may further comprise outputting joint bi-level image experts group (JBIG) image data by compressing the encoded image data according to JBIG standard.

The method may further comprise decoding the encoded image data to another halftone image data having a binary pixel.

The decoding of the encoded image data to the halftone image data may comprise calculating the number of either the bright or dark pixels in the decoded block by using the encoded image data of the decoded block and the encoded image data of neighboring blocks.

The decoding of the image data to the halftone image data may further comprise determining a screen region and an edge region from the decoded block by using the number of either the bright or dark pixels in the decoded block and numbers of either the bright or dark pixels in the neighboring blocks.

The determining of the screen region and the edge region from the decoded block may comprise using a larger of two values corresponding to a difference between a number of either bright or dark pixels in upper and lower blocks adjacent to the decoded block, and a difference between a number of either bright or dark pixels in left and right blocks adjacent to the decoded block.

The decoding of the image data into the halftone image data may further comprise calculating a screen order by using a halftone table used in converting the input image data into the another halftone image data having the binary pixel to process the data if the decoded block is determined as the screen region.

The calculating of the screen order and processing data may comprise decoding the encoded image data to the halftone image data by expressing a dark pixel corresponding to a position of the decoded block and having a smaller value than the number of the dark pixels in the decoded block and expressing a bright pixel corresponding to another position of the decoded block and having a larger or same value as the number of the dark pixels in the decoded block by using the screen order if the encoded image data is bit-encoded by using the number of the dark pixels in the block of the predetermined size.

The decoding of the image data to the halftone image data may further comprise calculating an edge order with the number of either the bright or dark pixels in the neighboring blocks and a weight function to express the edge region if the decoded block is determined as the edge region.

The calculating of the edge order may comprise using a weight value that is optimized through a genetic algorithm as the weight function.

According to another aspect of the invention there is provided an image forming apparatus, including a computer portion to generate and output encoded image data based on either bright or dark pixels of halftone image data divided into blocks, and a printer portion to receive the output encoded image data and to produce a decoded block by decoding the received encoded image data into another halftone image data.

The computer portion may include a bit encoder to convert a number of either the bright or dark pixels into a 4-bit encoded binary image data value corresponding to the number of either the bright or dark pixels.

The 4-bit encoded binary image data value may be 1111 if the number of either the bright or dark pixels is 16.

The printer portion may include a bit decoder to number pixels in the decoded block in an increasing order based on an order of a decreasing number of the bright and dark pixels in one of the blocks of the computer portion.

Each of the numbered pixel positions in the decoded block may be designated as dark until the number of dark pixels in the one of the blocks of the computer portion is reached.

According to another aspect of the invention there is provided an image forming system, comprising a halftone image converter to convert input image data into halftone image data having a binary pixel value corresponding to a bright pixel or a dark pixel, a bit encoder to divide the halftone image data into blocks of a predetermined size, and to perform a bit-encoding operation by using a number of either the bright or dark pixels in one of the blocks to output encoded image data, and a bit decoder to produce a decoded block by decoding the encoded image data output from the bit encoder into another halftone image data.

According to another aspect of the invention there is provided an image forming method, including encoding image data based on either bright or dark pixels of halftone image data divided into blocks, and producing a decoded block by decoding the received encoded image data into another halftone image data.

The encoding may include converting a number of either the bright or dark pixels into a 4-bit encoded binary image data value corresponding to the number of either the bright or dark pixels.

The 4-bit encoded binary image data value may be 1111 if the number of either the bright or dark pixels is 16.

The producing of a decoded block may include numbering pixels in the decoded block in an increasing order based on an order of a decreasing number of the bright and dark pixels in one of the divided blocks.

The producing of a decoded block may further include designating each of the numbered pixel positions in the decoded block as dark until the number of dark pixels in the one of the divided blocks is reached.

According to another aspect of the invention there is provided a computer readable recording medium having embodied thereon a computer program to execute a method, wherein the method comprises converting input image data having a plurality of bits per pixel into halftone image data having a binary pixel value corresponding to a bright pixel or a dark pixel, and dividing the halftone image data into blocks of a predetermined size and outputting encoded image data by bit-encoding the encoded image data through a number of either the bright or dark pixels in the block.

BRIEF DESCRIPTION OF THE DRAWINGS

The above and/or other aspects and utilities of the present general inventive concept will become apparent and more readily appreciated from the following description of the exemplary embodiments, taken in conjunction with the accompanying drawings of which:

FIG. 1 is a control flowchart of a conventional image forming method which reduces a size of transmission data;

FIGS. 2A and 2B are control block diagrams of configuration of an image forming apparatus according to an embodiment of the present general inventive concept;

FIG. 3 is a control flowchart of bit-encoding of halftone image data according to the present general inventive concept;

FIGS. 4A and 4B illustrate an example of the bit-encoding in FIG. 3;

FIG. 5 is a control flowchart of bit-decoding of encoded image data according to the present general inventive concept;

FIGS. 6A and 6B illustrate a process of converting 4-bit encoded image data into the number of dark pixels;

FIG. 7 illustrates a process of determining a screen region and an edge region;

FIGS. 8A to 8C illustrate a process of converting the number of dark pixels into 4X4 halftone image data;

FIGS. 9A to 9C illustrate a process of determining an edge order to convert the number of dark pixels in the edge region into 4X4 halftone image data;

FIG. 10 is a control flowchart of calculating a weight value that is optimized by a genetic algorithm;

FIG. 11 illustrates a process of defining an initial string of the genetic algorithm; and

FIGS. 12A and 12B illustrate a crossover operation and a mutation operation of the genetic algorithm.

DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

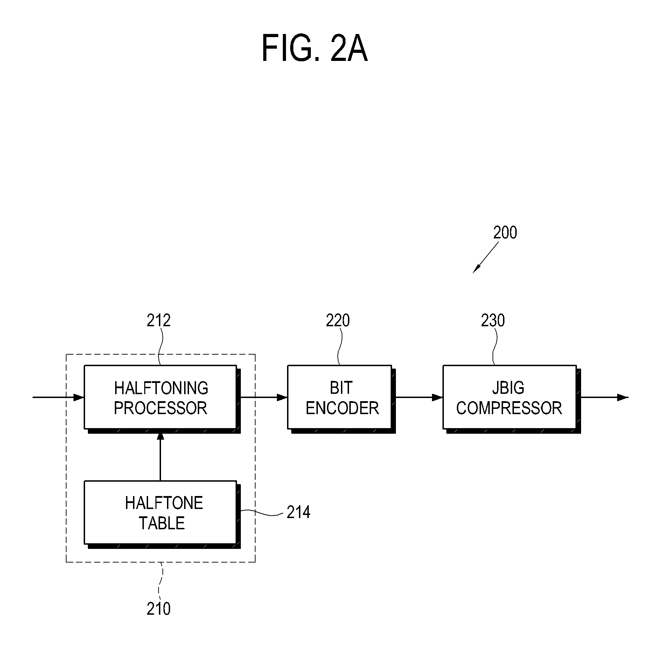

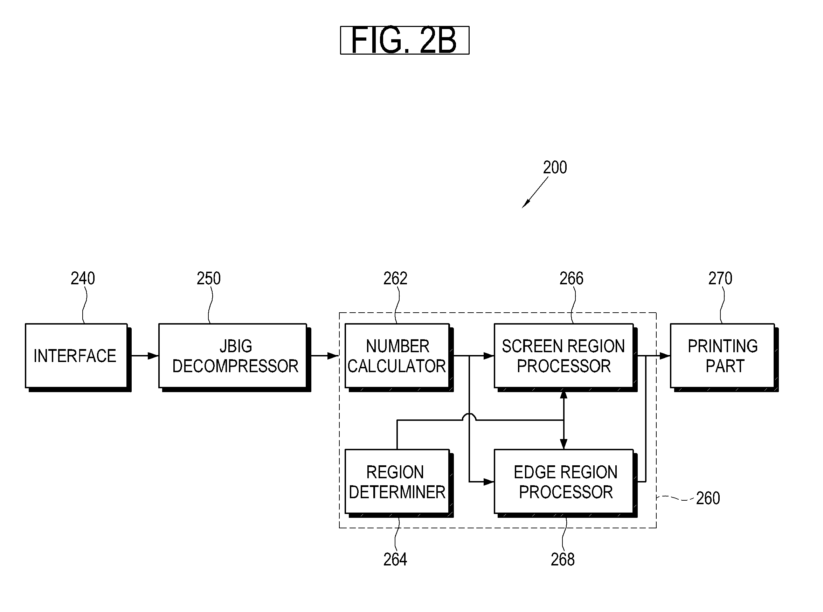

FIGS. 2A and 2B are control block diagrams illustrating configurations of two different parts of an image forming apparatus according to an embodiment of the present general inventive concept. FIG. 2A is a control block diagram illustrating a configuration of a sending side of an image forming apparatus, such as a computer. FIG. 2B is a control block diagram illustrating a configuration of a receiving side of an image forming apparatus such as a printer. The sending side illustrated in FIG. 2A and the receiving side illustrated in FIG. 2B may both be included in a single image forming apparatus.

As illustrated in FIG. 2A, the sending side of an image forming apparatus 200 comprises a halftone image converter 210, a bit encoder 220 and a JBIG compressor 230.

The halftone image converter 210 comprises a halftoning processor 212 and a halftone table 214, and converts input image data having a plurality of bits per pixel into halftone image data having a 1-bit binary pixel, which displays only a bright pixel and a dark pixel.

The halftoning processor 212 reads the halftone table 214 which is stored in a memory, and converts the input image data into the 1-bit halftone image data when receiving plural-bit input image data. For example, the halftoning processor 212 divides the input image data into a plurality of 4X4 pixel blocks and compares a pixel in one of the 4x4 pixel blocks with the 4X4 halftone table 214. If the input image data is larger than the data of halftone table 214, the halftoning processor 212 determines a bit value corresponding to the pixel to be one of 0 and 1 to convert the data into the 1-bit halftone image data. Accordingly, if the input image data is smaller than the data of halftone table 214, then the halftoning processor 212 determines a bit value corresponding to the pixel to be the other of 0 and 1.

The halftone table 214 can be either a clustered-dot type halftone table or a dispersed-dot type halftone table. The halftone image data may have varying printing quality which is dependent on the type of the halftone table 214.

The bit encoder 220 divides the halftone image data into blocks of a predetermined size, and executes bit-encoding by using either the bright pixels or dark pixels in the block to output the encoded image data. If a number of either the bright or the dark pixels of the block is 15 or less when the size of a predetermined block is identified in a 4X4 pixel unit, the corresponding number is encoded as a corresponding binary 4-bit image data value. In other words, if the number of dark pixels is three, then the corresponding binary 4-bit image data value is 0011. If the number of either the bright or the dark pixels of the block is 16, the halftone image data is encoded as the corresponding binary 4-bit image data value of 1111.

The JBIG compressor 230 compresses the encoded image data according to a JBIG standard to output JBIG image data. The JBIG standard is an international standard of an image compression method corresponding to binary images. The JBIG standard includes a layer encoding transmission to encode and transmit images in an order of increasing resolution. Therefore, images with a lowest resolution are encoded and transmitted first to represent an outline, and then images with gradually improved resolutions are encoded and transmitted.

As illustrated in FIG. 2B, the receiving side of the image forming apparatus 200 comprises an interface 240, a JBIG decompressor 250, a bit decoder 260 and a printing part 270.

The interface 240 receives the JBIG image data. The JBIG image data is obtained at the sending side of the image forming apparatus 200 of FIG. 2A, by dividing the halftone image data into the blocks with the predetermined sizes, and then by compressing the encoded image data which is bit-encoded by using either the number of bright pixels or the number of dark pixels in the block.

The JBIG decompressor 250 decompresses the JBIG image data which is compressed according to the JBIG standard in FIG. 2A to the encoded image data.

The bit decoder 260 comprises a number calculator 262, a region determiner 264, a screen region processor 266 and an edge region processor 268, and decodes the encoded image data into the halftone image data having the binary pixel.

The number calculator 262 calculates the number of either the bright pixels or the dark pixels of a block-to-be-decoded (hereinafter, to be called "decoded block") by using the encoded image data of the decoded block and the encoded image data of neighboring blocks.

The region determiner 264 discriminates the screen region and the edge region from the decoded block by using the number of the corresponding pixels in the decoded block and the number of the corresponding pixels in the neighboring blocks. To determine the screen region and the edge region, the region determiner 264 may utilize a larger of two values corresponding to a difference between the numbers of the corresponding pixels in upper and lower blocks which are adjacent to the decoded block, and a difference between the numbers of the corresponding pixels in left and right blocks which are adjacent to the decoded block.

The screen region processor 266 calculates a screen order by using the halftone table 214 which is used to convert the input image data into the halftone image data. The screen region processor 266 decodes the encoded image data that is bit-encoded by the number of the dark pixels of the block, into the halftone image data by expressing a dark pixel corresponding to the position of the decoded block and having a smaller value than the number of the dark pixels in the decoded block, and expressing a bright pixel corresponding to the position of the decoded block and having a larger or same value as the number of the dark pixels in the decoded block, through the screen order.

The edge region processor 268 calculates an edge order with the number of the corresponding pixels in the neighboring blocks of the decoded block and a weight function to express the edge region. The weight function may employ a weight value that is optimized through a genetic algorithm.

Hereinafter, the above-mentioned operation will be described in more detail.

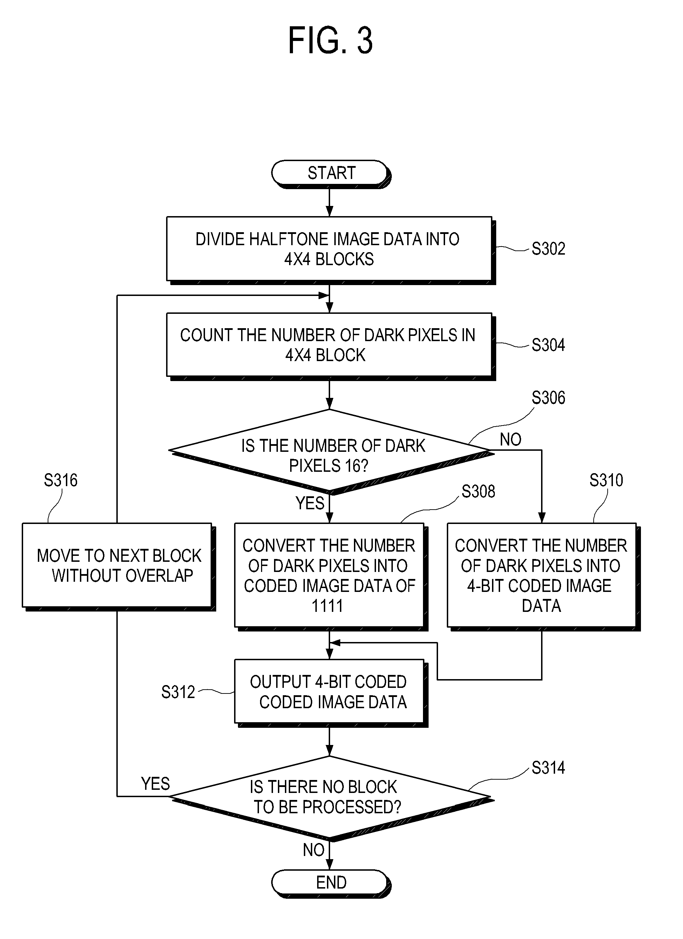

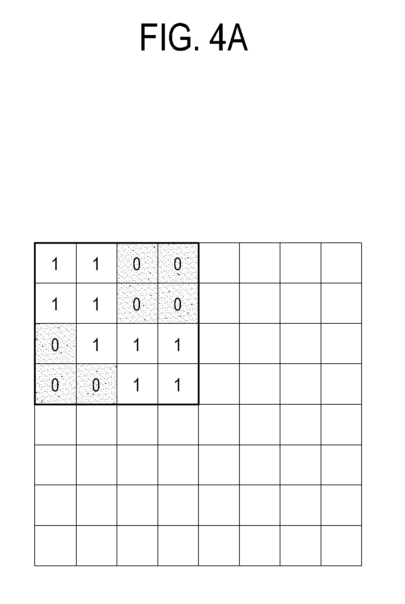

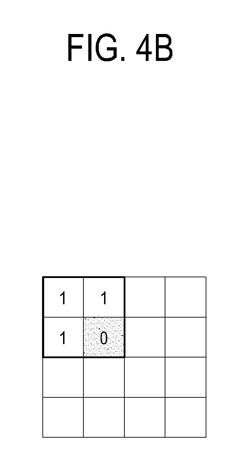

FIG. 3 illustrates a process of bit-encoding the halftone image data according to an embodiment of the present general inventive concept. FIGS. 4A and 4B illustrate examples of the bit-encoding in FIG. 3.

Referring to FIGS. 2A and 3, the bit encoder 220 divides the halftone image data into blocks having 4X4 pixels (that is, 4X4 blocks) in operation S302, and counts the number of the bright or dark pixels in the 4X4 block in operation S304. Hereinafter, the process of counting the number of the dark pixels will be described.

As mentioned above, if the number of the dark pixels in the block is 16 in operation S306, the number of the dark pixels is converted into the binary encoded image data value of 1111 in operation S308. Also as mentioned above, if the number of the dark pixels in the block is 15 or less in operation S306, the number of the dark pixels is converted into the corresponding binary 4-bit encoded image data in operation S310.

FIG. 4A illustrates a part of the halftone image data, in which the number of the dark pixels displayed as '0' in the 4X4 block is seven. FIG. 4B illustrates a bit-encoding result of the halftone image data in FIG. 4A. FIG. 4A illustrates 16-bit image data while FIG. 4B illustrates 4-bit image data, thereby reducing the size of the transmission data to one fourth.

Table 1 provides the encoded image data which is bit-encoded with respect to the number of the dark pixels.

[Table 1]

| The number of dark pixels | Encoded image data | The number of dark pixels | Encoded image data |
|---|---|---|---|
| 0 | 0000 | 9 | 1001 |
| 1 | 0001 | 10 | 1010 |
| 2 | 0010 | 11 | 1011 |
| 3 | 0011 | 12 | 1100 |
| 4 | 0100 | 13 | 1101 |
| 5 | 0101 | 14 | 1110 |
| 6 | 0110 | 15 | 1111 |
| 7 | 0111 | 16 | 1111 |
| 8 | 1000 | | |

The converted encoded image data is output to the JBIG compressor 230 or stored temporarily in a memory in operation S312. Unless all of the blocks of the input halftone image data is processed in operation S314, the next block is continuously bit-encoded without overlap in operation S316.

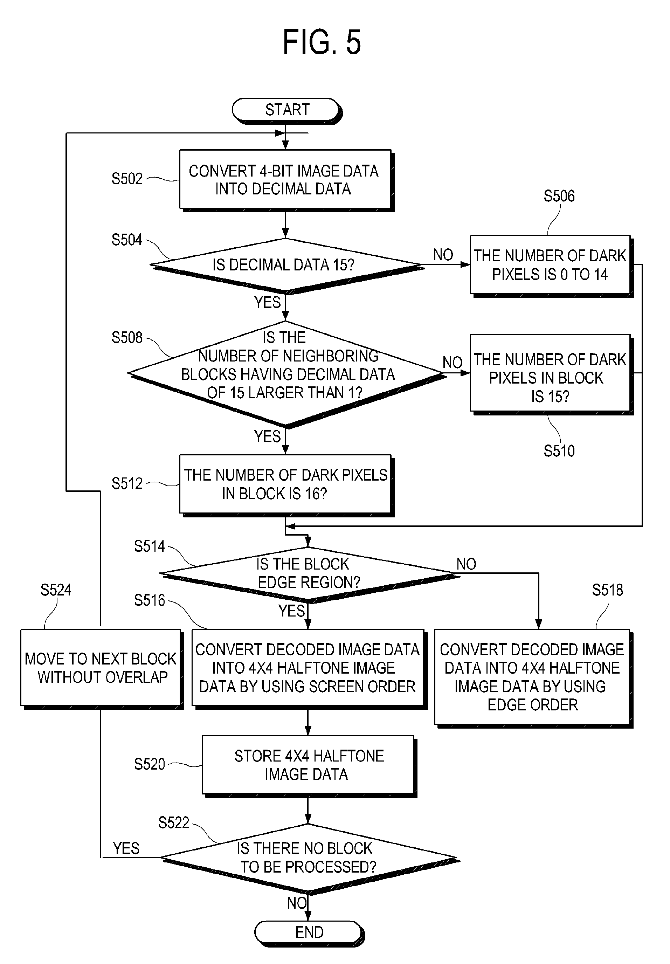

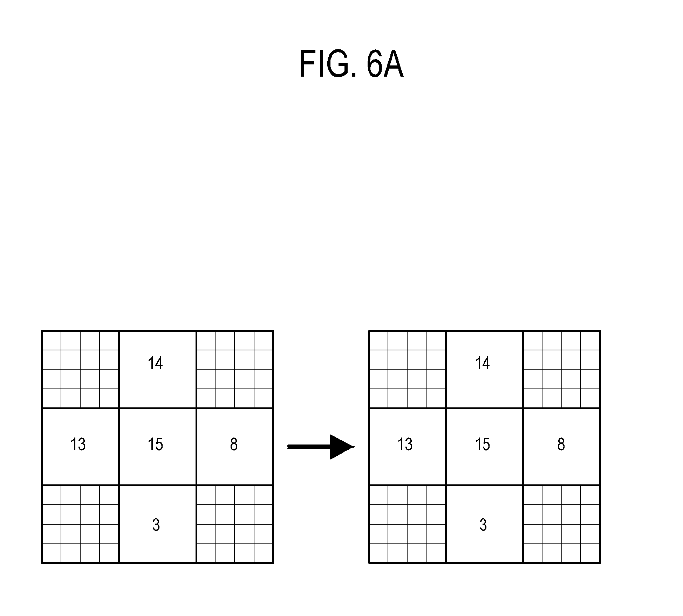

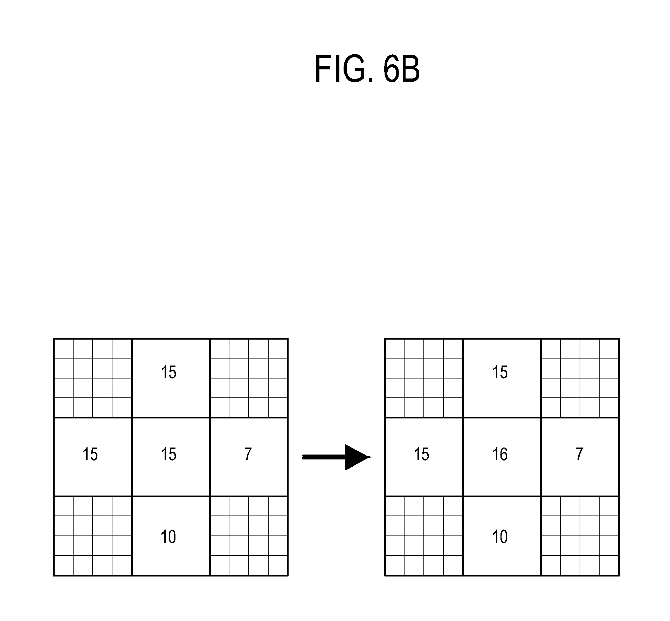

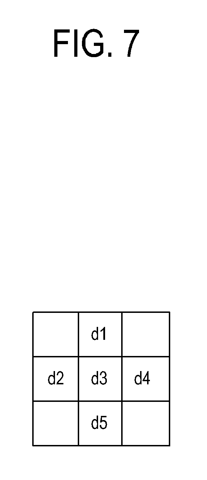

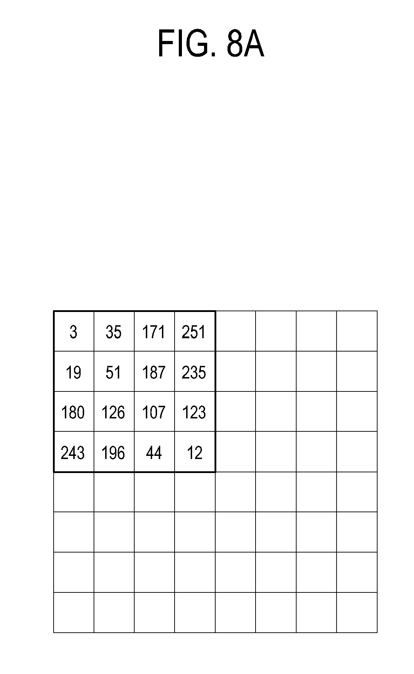

FIG. 5 is a control flowchart of bit-decoding the encoded image data according to an embodiment of the present general inventive concept. FIGS. 6A and 6B illustrate a process of converting the 4-bit encoded image data into the number of the dark pixels. FIG. 7 illustrates a process of determining a screen region and an edge region. FIGS. 8A through 8C illustrate a process of converting the number of the dark pixels into the 4X4 halftone image data.

The number calculator 262 of the bit decoder 260 converts the 4-bit encoded image data into decimal data to calculate the number of the dark pixels in the block in operation S502. If the decimal data value is not 15 in operation S504, the number of the dark pixels in the block is represented by the value of the decimal data in operation S506. If the decimal data value is 15 in operation S504, it is determined whether the number of neighboring blocks whose decimal data value is 15 is larger than 1 in operation S508. If the number of the neighboring blocks whose decimal data value is 15 is 1 or less than 1, the number of the dark pixels in the block is 15 in operation S510. If the number of the neighboring blocks whose decimal data value is 15 is larger than 1, the number of the dark pixels in the block is 16 in operation S512.

FIGS. 6A and 6B illustrate an example of the above-mentioned calculation. That is, FIGS. 6A and 6B illustrate a process of converting the 4-bit encoded image data value into the number of the dark pixels. Since the number of the dark pixels of 15 and 16 are all converted into the 1111 encoded image data value through the bit-encoding of the bit encoder 220, the 1111 encoded image data value is identified as the decimal data values of 15 and 16 in the bit-decoding process of the bit decoder 260. As illustrated in FIG. 6A, if the number of the decimal data value of 15 of the four neighboring blocks is 1 or less than 1, the 1111 encoded image data value represents the number of the dark pixels with the decimal data value of 15. As illustrated in FIG. 6B, however, if the number of the decimal data value of 15 of the four neighboring blocks is 2 or more, the 1111 encoded image data value represents the number of the dark pixels with the decimal data value of 16.

The region determiner 264 discriminates the screen region and the edge region from the decoded block by using the number of the corresponding pixels in the decoded block and the numbers of the corresponding pixels in the neighboring blocks in operation S514. The bit-decoding is performed by identifying the decoding block as the screen region and the edge region because the halftone image data would be decoded as a totally different image data value if bit-decoding of the edge region was performed in the same way as the screen region.

FIG. 7 illustrates a process of determining the screen region and the edge region. D1, D2, D3, D4 and D5 in FIG. 7 each represent the number of the dark pixels in the decoded block and the neighboring blocks. Formula 1 is used to determine whether the decoded block is the screen region or the edge region.

[Formula 1]

$$\text{Max}(|d1-d5|, |d2-d4|) \geq \text{reference value}$$

(1)

Here, the reference value refers to an extent of an edge. Seven is used as the reference value in the present general inventive concept. The screen region and the edge region are determined by using a larger of two values resulting from a difference between the numbers of the corresponding pixels in upper and lower blocks, and a difference between the numbers of the corresponding pixels in left and right blocks, with the upper block, lower block, left block, and right block all being adjacent to the decoded block.

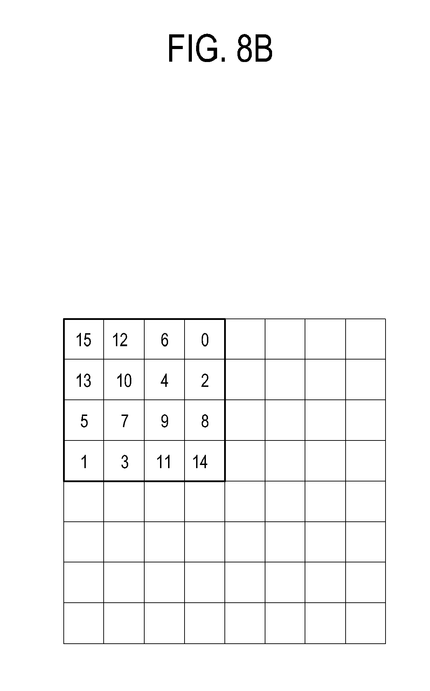

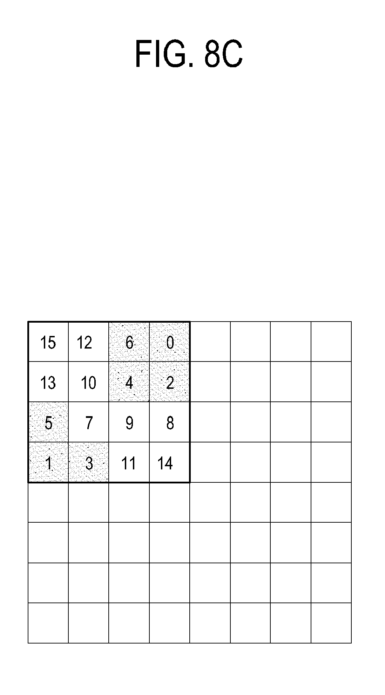

If the region determiner 264 determines that the decoded block is the screen region, the screen region processor 266 converts the encoded image data into the 4X4 halftone image data in operation S516. FIGS. 8A through 8C illustrate a process of converting the number of the dark pixels into the 4X4 halftone image data to restore the halftone image data in FIG. 4A, i.e., by using the number of the dark pixels. FIG. 8A illustrates a 4X4 halftone table which is used to half-tone the 4X4 blocks of the input image data. FIG. 8B illustrates a result of determining the screen order in a descending order after arranging the halftone table in FIG. 8A. FIG. 8C illustrates seven dark pixels by using the screen order, which is the same as the half tone image data in FIG. 4A. That is, the screen region processor 266 expresses a dark pixel corresponding to a location of the decoded block and having a smaller value than the number of the dark pixels of the decoded block, and expresses a bright pixel corresponding to a location of the decoded block and having a larger or same value as the number of the dark pixels of the decoded block, to decode the encoded image data to the halftone image data.

If the region determiner 264 determines that the decoded block is the edge region, the edge region processor 268 converts the number of the dark pixels into the 4X4 halftone image data by using the edge order in operation S518.

Then, the halftone image data is temporarily stored in a memory or output to the printing part 270 in operation S520. If there is a block to be bit-decoded in operation S522, bit-decoding is continuously executed without overlap in operation S524 after moving to the next block.

Hereinafter, a process of processing the edge region by the edge region processor 268 of FIG. 2B is described in more detail.

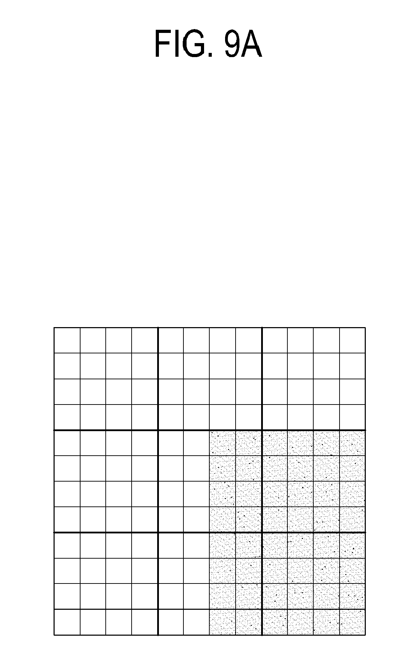

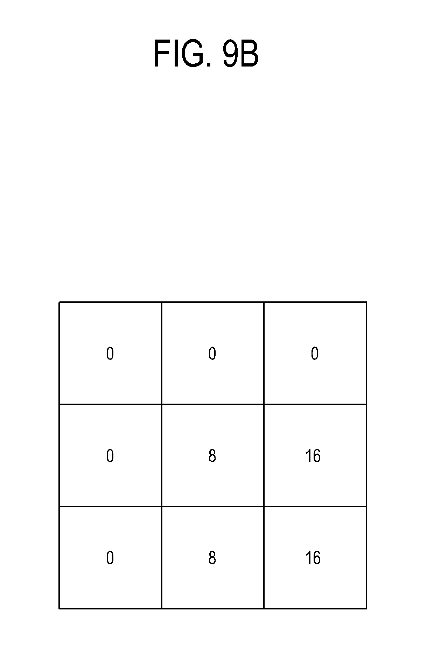

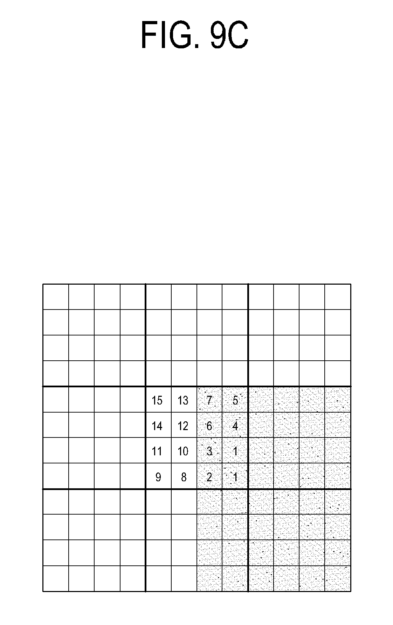

FIG. 9A illustrates a process of determining the edge order to convert the number of the dark pixels in the edge region into the 4X4 halftone image data. The numbers of the dark pixels in the neighboring blocks are used to determine the edge order. FIG. 9B illustrates the number of the dark pixels in the neighboring blocks. FIG. 9C illustrates the edge order and a result of decoding the numbers of the dark pixels in the neighboring blocks in FIG. 9A by using the edge order.

Table 2 refers to costs in each location of the 4X4 block to determine the edge order.

[Table 2]

| | | | |
|---|---|---|---|
| 0.5625 | 0.8125 | 7.3125 | 8.0625 |
| 0.6875 | 0.9375 | 7.4375 | 8.1875 |
| 3.9375 | 4.1875 | 10.6875 | 11.4375 |
| 4.3125 | 4.5625 | 11.0625 | 11.8125 |

The costs in Table 2 are calculated by using the weight value of an optimized distance through the genetic algorithm and the number of the dark pixels in the four neighboring blocks. Formula 2 is used to calculate the costs in Table 2.

[Formula 2]

$$\text{Cost}(i,j) = \sum_{k=1}^{4} f(k) \times W_D$$

(2)

Here, (i,j) refers to a position in the 4X4 block while f(k) refers to the number of the dark pixels in the four neighboring blocks. $W_D$ is a weight value of the distance that is optimized by the genetic algorithm.

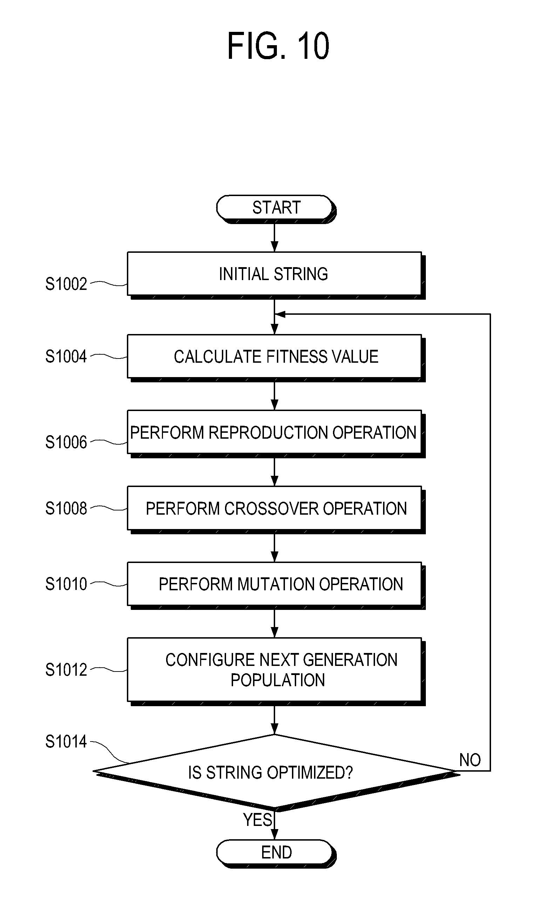

FIG. 10 is a control flowchart of calculating the weight value that is optimized by the genetic algorithm.

An initial string, i.e., the weight value, is represented by a predetermined binary data in operation S1002. Then, a fitness value is calculated in operation S1004. The genetic algorithm operation of a reproduction operation S1006, a crossover operation S1008 and a mutation operation S1010 are performed. The next generation population is determined in operation S1012, and then the operation is completed or the fitness value is recalculated according to the string optimization in operation S1014.

The fitness value is calculated by comparing the halftoning result of each pixel in the 4X4 block determined as the edge region in a test image, i.e., by comparing a value of "true" to the decoded data, and adding the number of the pixels having the same value. The fitness value may be calculated by a quantization method such as a hamming distance or correlation between the halftone block and the decoded data.

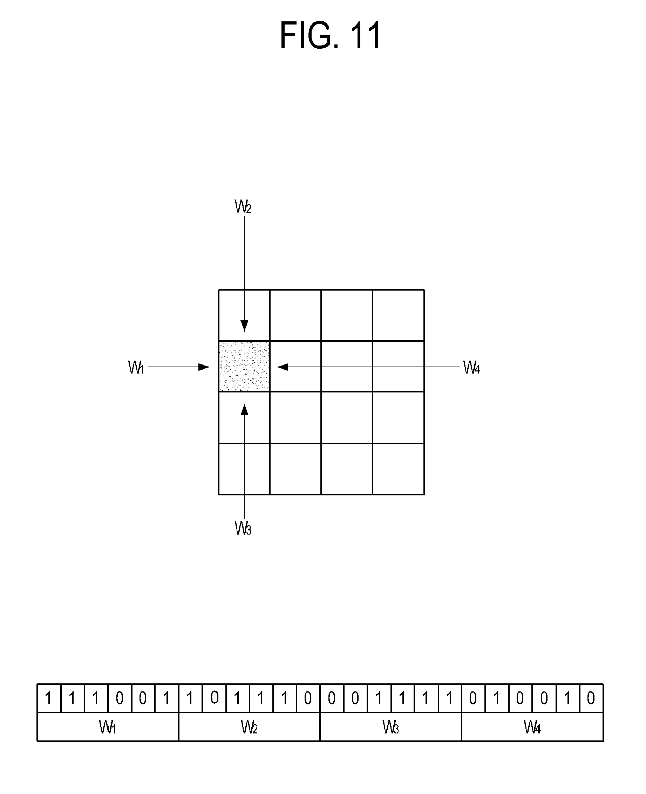

FIG. 11 illustrates a process of defining the initial string of the genetic algorithm. As illustrated therein, the initial string is defined by converting four weight values with respect to a distance to a binary number. The reproduction operation of FIG. 10 is performed by a reproduction probability which is determined by the fitness value of the respective strings in Formula 3.

[Formula 3]

$$P(i) = \frac{F(i)}{\sum\limits_{j=1}^{n} F(j)}$$

(3)

Here, P(i) refers to a reproduction probability of an i-th string, F(i) is a fitness value of the i-th string and n is the number of total strings.

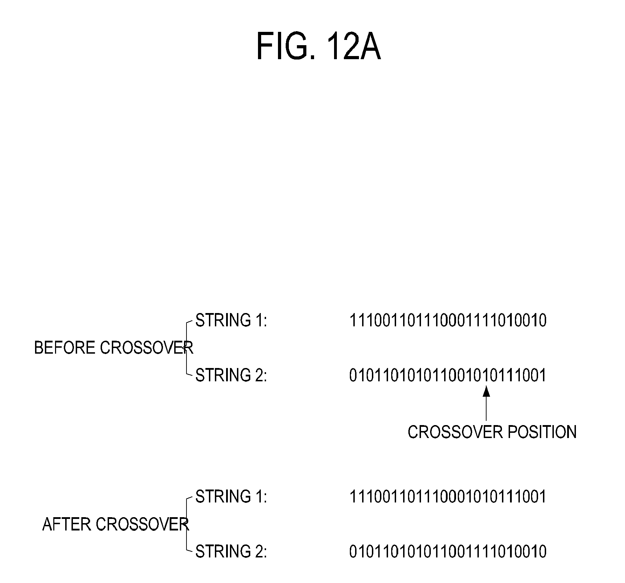

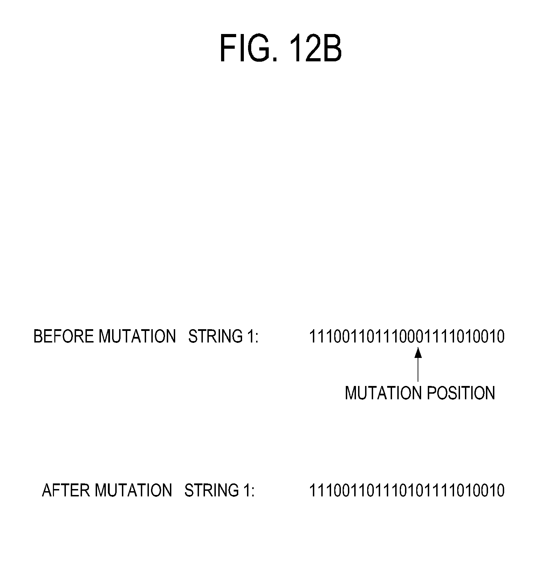

FIGS. 12A and 12B illustrate a process of the crossover operation of FIG. 10 and the mutation operation of FIG. 10, which both correspond to the genetic algorithm. FIG. 12A illustrates the crossover operation, in which two strings and a position of the crossover operation are selected. Then, the two strings are exchanged based on the position of the crossover operation. FIG. 12B illustrates the mutation operation, in which the string and a position of the mutation operation are selected. Then, a binary value corresponding to the position of the mutation operation is reversed.

The present general inventive concept can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As described above, the present general inventive concept provides an image forming apparatus which reduces a size of image data transmitted from a computer to a printer to improve a printing speed, and an image forming method thereof.

Also, the present general inventive concept provides an image forming apparatus which improves spatial resolution with bit-encoding, and an image forming method thereof.

Further, the present general inventive concept provides an image forming apparatus which clarifies a boundary line when using a clustered-dot screen, and an image forming method thereof.

Although a few exemplary embodiments of the present general inventive concept have been shown and described, it will be appreciated by those skilled in the art that changes may be made in these exemplary embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

**1.** An image forming apparatus, comprising:

a halftone image converter (210) to convert input image data having a plurality of bits per pixel into halftone image data having a binary pixel value corresponding to a bright pixel or a dark pixel; and

a bit encoder (220) to divide the halftone image data into blocks of a predetermined size, and to perform a bit-encoding operation by using a number of either the bright or dark pixels in the block to output encoded image data.

2. The apparatus according to claim 1, wherein the bit encoder (220) uses 4X4 pixels as the predetermined size of the block.

3. The apparatus according to claim 2, wherein the bit encoder (220) converts the number of either the bright or dark pixels in the block into a 4-bit encoded binary image data value corresponding to the number of either the bright or dark pixels in the block if the number of either the bright or dark pixels in the block is 15 or less, and converts the number of either the bright or dark pixels in the block into a 4-bit encoded image data value of 1111 if the number of either the bright or dark pixels in the block is 16.

4. The apparatus according to any preceding claim, further comprising a joint bi-level image experts group (JBIG) compressor (230) to compress the encoded image data according to JBIG standard and to output corresponding JBIG image data.

5. An image forming apparatus, comprising:

an interface (240) to receive encoded image data that is generated by dividing halftone image data into blocks of a predetermined size and bit-encoding by using a number of either bright or dark pixels in each of the blocks of the predetermined size; and

a bit decoder (260) to produce a decoded block by decoding the received encoded image data into another halftone image data having a binary pixel.

6. The apparatus according to claim 5, wherein the bit decoder (260) comprises a number calculator (262) to calculate the number of either bright or dark pixels in the decoded block by using the encoded image data of the decoded block and encoded image data of neighboring blocks.

7. The apparatus according to claim 6, further comprising a region determiner (264) to determine a screen region and an edge region from the decoded block by using the number of either the bright or dark pixels in the decoded block and numbers of either bright or dark pixels in the neighboring blocks.

8. The apparatus according to claim 7, wherein the region determiner (264) uses a larger of two values corresponding to a difference between a number of either bright or dark pixels in upper and lower blocks adjacent to the decoded block, and a difference between number of either bright or dark pixels in left and right blocks adjacent to the decoded block, to determine the screen region and the edge region.

9. The apparatus according to any one of claims 6 to 8, wherein the bit decoder (260) further comprises a screen region processor (266) to calculate a screen order by using a halftone table used to convert the encoded image data into the another halftone image data having the binary pixel.

10. The apparatus according to claim 9, wherein the screen region processor (266) decodes the encoded image data to the another halftone image data by expressing a dark pixel corresponding to a position of the decoded block and having a smaller value than the number of the dark pixels in the decoded block and by expressing a bright pixel corresponding to another position of the decoded block and having a larger or same value as the number of the dark pixels in the decoded block by using the screen order if the encoded image data is bit-encoded with the number of the dark pixels in the block of the predetermined size.

11. The apparatus according to any one of claims 6 to 10, wherein the bit decoder (260) further comprises an edge region processor (268) to calculate an edge order with a number of either bright or dark pixels in the neighboring blocks and a weight function to express an edge region.

12. The apparatus according to claim 11, wherein the edge region processor (268) uses, as a weight function, a weight value that is optimized through a genetic algorithm.

13. An image forming method, comprising:

converting input image data having a plurality of bits per pixel into halftone image data having a binary pixel value corresponding to a bright pixel or a dark pixel; and

dividing the halftone image data into blocks of a predetermined size and outputting encoded image data by bit-encoding the encoded image data through a number of either the bright or dark pixels in the block.

14. The method according to claim 13, wherein the outputting of the encoded image data comprises using 4X4 pixels as the size of the predetermined block.

15. The method according to claim 14, wherein the outputting of the encoded image data comprises:

converting the number of either the bright or dark pixels in the blocks into 4-bit encoded binary image data corresponding to the number of either the bright or dark pixels if the number of either the bright or dark pixels in the block is 15 or less; and

converting the number of the dark pixels in the block into 4-bit encoded image data value of 1111 if the number of the dark pixels in the block is 16.

16. The method according to any one of claims 13 to 15, further comprising outputting joint bi-level image experts group (JBIG) image data by compressing the encoded image data according to JBIG standard.

17. The method according to any one of claims 13 to 17, further comprising decoding the encoded image data to another halftone image data having a binary pixel.

18. The method according to claim 17, wherein the decoding of the encoded image data to the halftone image data comprises calculating the number of either the bright or dark pixels in the decoded block by using the encoded image data of the decoded block and encoded image data of neighboring blocks.

19. The method according to claim 18, wherein the decoding of the image data to the halftone image data further comprises determining a screen region and an edge region from the decoded block by using the number of either the bright or dark pixels in the decoded block and numbers of either the bright or dark pixels in the neighboring blocks.

20. The method according to claim 19, wherein the determining of the screen region and the edge region from the decoded block comprises using a larger of two values corresponding to a difference between a number of either bright or dark pixels in upper and lower blocks adjacent to the decoded block, and a difference between a number of either bright or dark pixels in left and right blocks adjacent to the decoded block.

21. The method according to claim 19 or claim 20, wherein the decoding of the image data into the halftone image data further comprises calculating a screen order by using a halftone table used in converting the input image data into the another halftone image data having the binary pixel to process the data if the decoded block is determined as the screen region.

22. The method according to claim 21, wherein the calculating of the screen order and processing data comprises decoding the encoded image data to the halftone image data by expressing a dark pixel corresponding to a position of the decoded block and having a smaller value than the number of the dark pixels in the decoded block and expressing a bright pixel corresponding to another position of the decoded block and having a larger or same value as the number of the dark pixels in the decoded block by using the screen order if the encoded image data is bit-encoded by using the number of the dark pixels in the block of the predetermined size.

23. The method according to any one of claims 19 to 22, wherein the decoding of the image data to the halftone image data further comprises calculating an edge order with the number of either the bright or dark pixels in the neighboring blocks and a weight function to express the edge region if the decoded block is determined as the edge region.

24. The method according to claim 23, wherein the calculating of the edge order comprises using a weight value that is optimized through a genetic algorithm as the weight function.

25. An image forming apparatus, comprising:

a computer portion to generate and output encoded image data based on either bright or dark pixels of halftone image data divided into blocks; and

a printer portion to receive the output encoded image data and to produce a decoded block by decoding the received encoded image data into another halftone image data.

26. The image forming apparatus of claim 25, wherein the computer portion comprises a bit encoder (220) to convert a number of either the bright or dark pixels into a 4-bit encoded binary image data value corresponding to the number of either the bright or dark pixels.

27. The image forming apparatus of claim 26, wherein the 4-bit encoded binary image data value is 1111 if the number of either the bright or dark pixels is 16.

28. The image forming apparatus to any one of claims 25 to 27, wherein the printer portion comprises a bit decoder (260) to number pixels in the decoded block in an increasing order based on an order of a decreasing number of the bright and dark pixels in one of the blocks of the computer portion.

29. The image forming apparatus of claim 28, wherein each of the numbered pixel positions in the decoded block are designated as dark until the number of dark pixels in the one of the blocks of the computer portion is reached.

30. An image forming system, comprising:

    a halftone image converter (210) to convert input image data into halftone image data having a binary pixel value corresponding to a bright pixel or a dark pixel;
    a bit encoder (220) to divide the halftone image data into blocks of a predetermined size, and to perform a bit-encoding operation by using a number of either the bright or dark pixels in one of the blocks to output encoded image data; and
    a bit decoder (260) to produce a decoded block by decoding the encoded image data output from the bit encoder (220) into another halftone image data.

31. An image forming method, comprising:

    encoding image data based on either bright or dark pixels of halftone image data divided into blocks; and
    producing a decoded block by decoding the received encoded image data into another halftone image data.

32. The image forming method of claim 31, wherein the encoding comprises converting a number of either the bright or dark pixels into a 4-bit encoded binary image data value corresponding to the number of either the bright or dark pixels.

33. The image forming method of claim 32, wherein the 4-bit encoded binary image data value is 1111 if the number of either the bright or dark pixels is 16.

34. The image forming method to any one of claims 31 to 33, wherein the producing of a decoded block comprises numbering pixels in the decoded block in an increasing order based on an order of a decreasing number of the bright and dark pixels in one of the divided blocks.

35. The image forming method of claim 34, wherein the producing of a decoded block further comprises designating each of the numbered pixel positions in the decoded block as dark until the number of dark pixels in the one of the divided blocks is reached.

36. A computer readable recording medium having embodied thereon a computer program to execute a method, wherein the method comprises:

    converting input image data having a plurality of bits per pixel into halftone image data having a binary pixel value corresponding to a bright pixel or a dark pixel; and
    dividing the halftone image data into blocks of a predetermined size and outputting encoded image data by bit-encoding the encoded image data through a number of either the bright or dark pixels in the block.

# FIG. 1
# (PRIOR ART)

```
┌─────────────────┐
│      START      │
└─────────────────┘
         │
         ▼
┌──────────────────────────┐
│  HALFTONE AND SCALE INPUT │   S102
│        IMAGE DATA         │
└──────────────────────────┘
         │
         ▼
┌──────────────────────────┐
│ COMPRESS SCALED HALFTONE  │
│  DATA ACCORDING TO JBIG   │   S104
│  STANDARD AND TRANSMIT    │
│     COMPRESSED DATA       │
└──────────────────────────┘
         │
         ▼
┌──────────────────────────┐
│ DECOMPRESS TRANSMISSION   │   S106
│ DATA ACCORDING TO JBIG    │
│        STANDARD           │
└──────────────────────────┘
         │
         ▼
┌──────────────────────────┐
│ GENERATE HALFTONE IMAGE   │
│ DATA FROM SCALED HALFTONE │
│ IMAGE DATA ACCORDING TO   │   S108
│ SPATIAL RESOLUTION        │
│ IMPROVING ALGORITHM       │
└──────────────────────────┘
         │
         ▼
┌──────────────────────────┐
│ PRINTING PART PRINTS      │   S110
│ HALFTONE IMAGE DATA       │
└──────────────────────────┘
         │
         ▼
┌─────────────────┐
│       END       │
└─────────────────┘
```

# FIG. 2A

EP 1 924 077 A2

# FIG. 2B

200

240

INTERFACE

250

JBIG
DECOMPRESSOR

262

NUMBER
CALCULATOR

266

SCREEN REGION
PROCESSOR

270

PRINTING
PART

264

REGION
DETERMINER

268

EDGE REGION
PROCESSOR

260

# FIG. 3

```
                    ┌──────────┐
                    │  START   │
                    └────┬─────┘
                         │
        ┌────────────────▼────────────────┐
        │  DIVIDE HALFTONE IMAGE DATA INTO │──── S302
        │           4X4 BLOCKS             │
        └────────────────┬────────────────┘
                         │
        ┌────────────────▼────────────────┐
        │  COUNT THE NUMBER OF DARK PIXELS │──── S304
        │  IN 4X4 BLOCK                    │
        └────────────────┬────────────────┘
                         │
                                                    S306
                  ◇──────────────────◇
                  │  IS THE NUMBER OF DARK │────NO────┐
                  │     PIXELS 16?         │          │
                  ◇──────────────────◇               │
                         │YES                          │
  S316                                    S308          S310
┌──────────────┐  ┌──────────────────┐  ┌──────────────────┐
│ MOVE TO NEXT │  │ CONVERT THE NUMBER │  │ CONVERT THE NUMBER │
│ BLOCK        │  │ OF DARK PIXELS INTO│  │ OF DARK PIXELS INTO│
│ WITHOUT      │  │ CODED IMAGE DATA OF│  │ 4-BIT CODED IMAGE  │
│ OVERLAP      │  │ 1111               │  │ DATA               │
└──────┬───────┘  └─────────┬──────────┘  └─────────┬────────┘
       │                    │                       │
       │          ┌─────────▼──────────┐            │
       │   S312───│ OUTPUT 4-BIT CODED │◄───────────┘
       │          │ CODED IMAGE DATA   │
       │          └─────────┬──────────┘
       │                    │
       │              ◇──────────────◇        S314
       └───YES────────│ IS THERE NO BLOCK │
                      │ TO BE PROCESSED?  │
                      ◇──────────────◇
                            │NO
                      ┌─────▼─────┐
                      │    END    │
                      └───────────┘
```

# FIG. 4A

| 1 | 1 | 0 | 0 | | | | |
|---|---|---|---|---|---|---|---|
| 1 | 1 | 0 | 0 | | | | |
| 0 | 1 | 1 | 1 | | | | |
| 0 | 0 | 1 | 1 | | | | |
| | | | | | | | |
| | | | | | | | |
| | | | | | | | |
| | | | | | | | |

# FIG. 4B

| 1 | 1 |  |  |
|---|---|---|---|
| 1 | 0 |  |  |
|   |   |  |  |
|   |   |  |  |

# FIG. 5

START

S502 — CONVERT 4-BIT IMAGE DATA INTO DECIMAL DATA

S504 — IS DECIMAL DATA 15? — NO → S506 THE NUMBER OF DARK PIXELS IS 0 TO 14

YES

S508 — IS THE NUMBER OF NEIGHBORING BLOCKS HAVING DECIMAL DATA OF 15 LARGER THAN 1? — NO → THE NUMBER OF DARK PIXELS IN BLOCK IS 15? S510

YES

S512 — THE NUMBER OF DARK PIXELS IN BLOCK IS 16?

S514 — IS THE BLOCK EDGE REGION? — NO → S518 CONVERT DECODED IMAGE DATA INTO 4X4 HALFTONE IMAGE DATA BY USING EDGE ORDER

YES

S524 MOVE TO NEXT BLOCK WITHOUT OVERLAP

S516 — CONVERT DECODED IMAGE DATA INTO 4X4 HALFTONE IMAGE DATA BY USING SCREEN ORDER

S520 — STORE 4X4 HALFTONE IMAGE DATA

S522 — IS THERE NO BLOCK TO BE PROCESSED? — YES

NO

END

EP 1 924 077 A2

# FIG. 6A

20

# FIG. 6B

# FIG. 7

| | d1 | |
|---|---|---|
| d2 | d3 | d4 |
| | d5 | |

# FIG. 8A

| 3 | 35 | 171 | 251 | | | | |
|---|----|-----|-----|---|---|---|---|
| 19 | 51 | 187 | 235 | | | | |
| 180 | 126 | 107 | 123 | | | | |
| 243 | 196 | 44 | 12 | | | | |
| | | | | | | | |
| | | | | | | | |
| | | | | | | | |
| | | | | | | | |

# FIG. 8B

| 15 | 12 | 6 | 0 | | | | |
|----|----|----|----|---|---|---|---|
| 13 | 10 | 4 | 2 | | | | |
| 5 | 7 | 9 | 8 | | | | |
| 1 | 3 | 11 | 14 | | | | |
| | | | | | | | |
| | | | | | | | |
| | | | | | | | |
| | | | | | | | |

# FIG. 8C

| | | | | | | | |
|---|---|---|---|---|---|---|---|
| 15 | 12 | 6 | 0 | | | | |
| 13 | 10 | 4 | 2 | | | | |
| 5 | 7 | 9 | 8 | | | | |
| 1 | 3 | 11 | 14 | | | | |
| | | | | | | | |
| | | | | | | | |
| | | | | | | | |
| | | | | | | | |

# FIG. 9A

# FIG. 9B

| | | |
|---|---|---|
| 0 | 0 | 0 |
| 0 | 8 | 16 |
| 0 | 8 | 16 |

# FIG. 9C

# FIG. 10

```
                        ┌──────────────┐
                        │    START     │
                        └──────┬───────┘
                               │
                               ▼
S1002 ──────┌──────────────────────────────────┐
            │          INITIAL STRING           │
            └──────────────────┬───────────────┘
                               │
                               ▼ ◄──────────────┐
S1004 ──────┌──────────────────────────────────┐│
            │       CALCULATE FITNESS VALUE      ││
            └──────────────────┬───────────────┘│
                               │                 │
                               ▼                 │
S1006 ──────┌──────────────────────────────────┐│
            │    PERFORM REPRODUCTION OPERATION  ││
            └──────────────────┬───────────────┘│
                               │                 │
                               ▼                 │
S1008 ──────┌──────────────────────────────────┐│
            │    PERFORM CROSSOVER OPERATION     ││
            └──────────────────┬───────────────┘│
                               │                 │
                               ▼                 │
S1010 ──────┌──────────────────────────────────┐│
            │     PERFORM MUTATION OPERATION     ││
            └──────────────────┬───────────────┘│
                               │                 │
                               ▼                 │
S1012 ──────┌──────────────────────────────────┐│
            │     CONFIGURE NEXT GENERATION      ││
            │           POPULATION              ││
            └──────────────────┬───────────────┘│
                               │                 │
                               ▼             NO  │
S1014 ─────────◄  IS STRING OPTIMIZED?  ►────────┘
                          │
                        YES│
                           ▼
                    ┌──────────────┐
                    │     END      │
                    └──────────────┘
```

# FIG. 11

| 1 | 1 | 1 | 0 | 0 | 1 | 1 | 0 | 1 | 1 | 1 | 0 | 0 | 0 | 1 | 1 | 1 | 0 | 1 | 0 | 0 | 1 | 0 |
|---|---|---|---|---|---|---|---|---|---|---|---|---|---|---|---|---|---|---|---|---|---|---|

| $W_1$ | | | | | | $W_2$ | | | | | | $W_3$ | | | | | | $W_4$ | | | | |

# FIG. 12A

BEFORE CROSSOVER

STRING 1:  11100110111000111101000010

STRING 2:  010110101011001010111001

CROSSOVER POSITION

AFTER CROSSOVER

STRING 1:  11100110111000101011001

STRING 2:  010110101011001111010010

# FIG. 12B

BEFORE MUTATION  STRING 1:      11100110111000111010010

MUTATION POSITION

AFTER MUTATION  STRING 1:      11100110111010111010010